# EUROPEAN PATENT APPLICATION

(11) **EP 1 282 326 A1**
(43) Date of publication of application: **05.02.2003**
(21) Application number: 02255131.1
(22) Date of filing: 22.07.2002
(51) Int. Cl.: H04Q 7/38

(54) **Method for routing a call to a roaming mobile unit**

(30) Priority: 01.08.2001 US 920471
(71) Applicant: LUCENT TECHNOLOGIES INC., Murray Hill, New Jersey 07974-0636 (US)
(72) Inventor: Zhong, Jin Yang, Naperville, Illinois 60565 (US); Jie, Yao, Naperville, Illinois 60565 (US)
(74) Representative: Watts, Christopher Malcolm Kelway, Dr.

(57) **Abstract**

A calling phone (110) initiates a call request to a roaming mobile unit (160). The call request is routed to the home MSC (140) of the called roaming mobile unit (160). The home MSC (140) routes the call request to the mobile unit (160), and upon answering by the called mobile unit (160), a first voice path is established between the calling phone (110) and the roaming mobile unit (160). The serving MSC (150) initiates backward signaling to the switch (120) to set up a second voice channel that does not traverse the home MSC (140). The voice signals from the call are then transferred to the second voice channel, and the links from the first voice channel are released.

## Description

### Field Of The Invention

The present invention relates generally to communication systems, and more particularly to a method for routing a call to a mobile unit in a communication system.

### Background Of The Invention

Current wireless communication systems provide the ability for users to roam from their home systems. Roaming refers to a mobile unit that is utilizing services provided by equipment that is located outside of its home coverage area.

While roaming, a mobile unit can obtain service from a serving Mobile Switching Center (MSC) that is located near the roaming mobile unit. Call requests coming in for the roaming mobile unit are first routed to the home MSC of the mobile unit. The home MSC knows the location of the mobile unit and routes the call request to the serving MSC.

One problem with the existing art is that all call requests from a calling party to a called mobile unit are first routed through the home MSC of the called mobile unit, even in cases when the calling party is in proximity to the called mobile unit and the home MSC of the mobile unit is located at a distance from the current location of the roaming mobile unit. In such a scenario, the call request is routed from the calling party to the home MSC. This request typically traverses a Public Switched Telephone Network (PSTN) if the calling party is a wireline phone, or an MSC if the calling party is a mobile phone. The home MSC then routes the call request to the MSC that is currently serving the roaming mobile unit. Often, this routing will re-traverse either the PSTN or the MSC of the calling party.

Once the call is established, the routing of voice and/or data is accomplished via the routing path used to establish the call. For example, a mobile phone user whose home MSC is located in New York is roaming in Los Angeles. If a calling party in Los Angeles calls the mobile unit, the call is routed to the home MSC of the called mobile unit, which is located in New York. Once the call is established, all voice and data passed between the calling party and the roaming mobile unit is routed through the home MSC. Consequently, voice is sent from Los Angeles to New York, and then back to Los Angeles.

The present method of routing calls through the home MSC of a roaming mobile unit leads to an inefficient use of bandwidth within a communication system. Further, the current method leads to slower access times, a greater likelihood of dropped calls, decreased quality of service, and significant degradation of system performance.

Therefore, a need exists for a method of routing calls to a roaming mobile unit without wasting bandwidth while increasing the quality of service and overall system performance.

### Brief Summary Of The Invention

It is an object of the present invention to provide a communication system that routes calls between a calling phone and a roaming mobile unit without wasting bandwidth while increasing the quality of service and overall system performance.

The present invention provides such a system by having the serving MSC of a roaming mobile unit perform backward signaling with the switch or MSC that the calling party is connected to. The serving MSC thereby selects a voice channel for the call that is different than the original voice channel established during the start of the call. Parts of the original communication path are then released, thereby freeing them to be used by other entities in the communication system.

In this manner, a call path used to send voice and/or data between a calling party and a roaming mobile unit can be significantly shorter than the original path used to locate and page the roaming mobile unit. By eliminating links in the communication path, a communication path between the calling party and the called roaming mobile unit is established that leads to a more efficient use of bandwidth within the communication system. Further, the present invention provides a decreased likelihood of dropped calls, greater quality of service, and a significant improvement in system performance.

### Brief Description Of The Several Views Of The Drawings

FIG. 1 depicts a communication system in accordance with the present invention.

FIG. 2 depicts a flow chart of a calling phone calling a roaming mobile unit in accordance with the present invention.

### Detailed Description Of The Invention

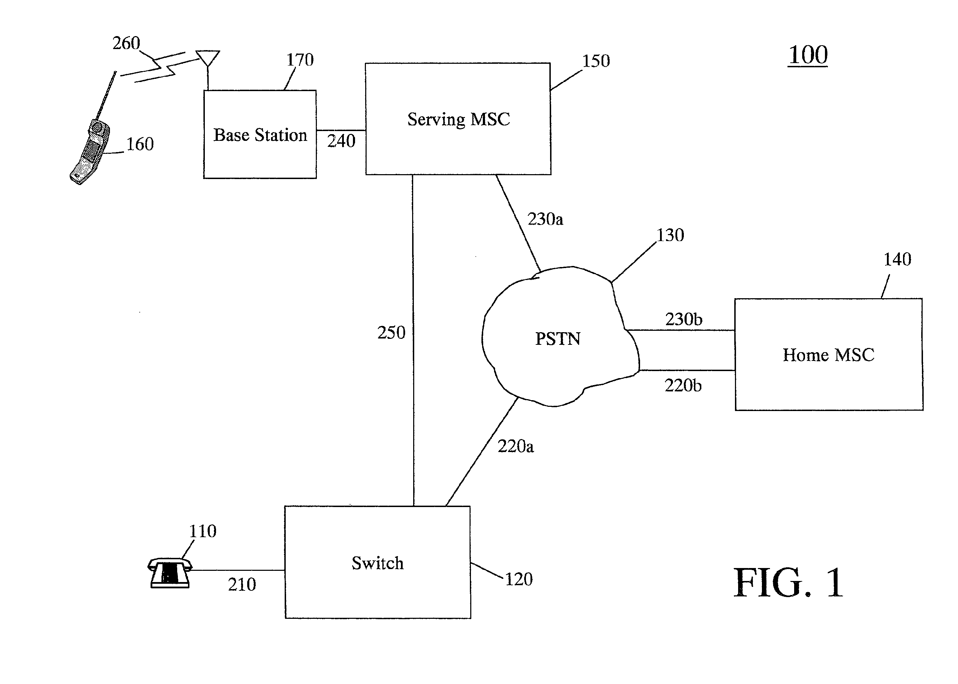

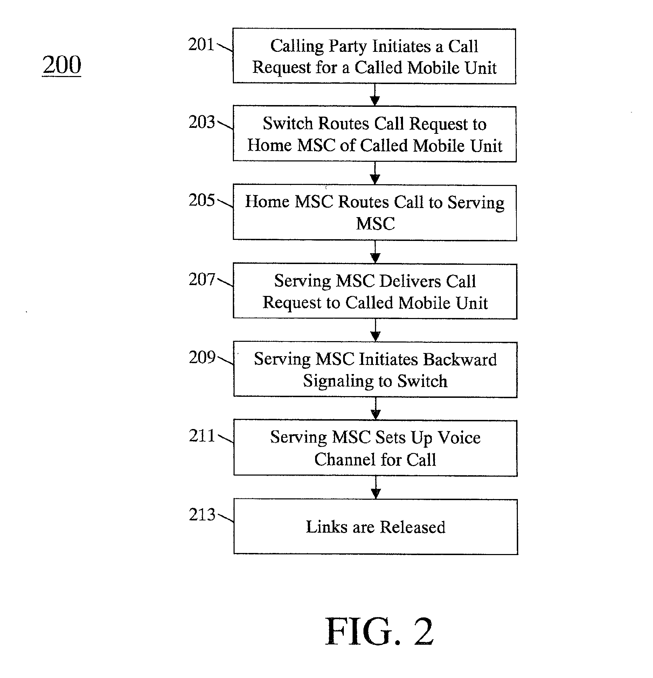

The present invention can be better understood with reference to FIGs. 1 and 2. FIG. 1 depicts a communication system 100 in accordance with the present invention. Communication system 100 can be any cellular system. Communication system 100 can utilize multiple air interface standards, including but not limited to Code Division Multiple Access (CDMA), Time Division Multiple Access (TDMA), cdma2000, Universal Mobile Telecommunications System (UMTS), Wideband CDMA (W-CDMA), Global System for Mobile Communications (GSM), and UWC-136, a TDMA-based technology.

Communication system 100 includes a calling phone 110, a switch 120, a Public Switched Telephone Network (PSTN) 130, a home Mobile Switching Center (MSC) 140, a serving MSC 150, a base station 170, and a mobile unit 160.

In the exemplary embodiment depicted in FIG. 1, calling phone 110 is a wireline or POTS (Plain Old Telephone System) phone. In an alternate embodiment of the present invention, the calling phone can be a mobile phone or the like that connects to an MSC via a base station. In the exemplary embodiment depicted in FIG. 1, calling phone 110 is connected to switch 120 via link 210. It should be understood that a plurality of wireline phones are coupled to switch 120 via dedicated wireline links, but only phone 110 is shown for clarity. In the exemplary embodiment depicted in FIG. 1, calling phone 110 is initiating a call request for mobile phone 160.

Switch 120 is coupled to PSTN 130 via link 220a and to Serving MSC 150 via link 250. Switch 120 receives the call request from calling phone 110 and routes the call request to PSTN 130 via link 220a.

PSTN 130 receives the call request from switch 120. PSTN 130 knows the home MSC that called phone 160 is registered to. PSTN 130 routes the call request via link 220b to Home MSC 140. Home MSC 140 is the MSC to which called phone 160 is registered.

Home MSC 140, after receiving the call request from PSTN 130, determines the current location of called phone 160. This is done using known locating techniques, and typically involves accessing a database to determine the current location of called phone 160. Upon determining the location of called phone 160, Home MSC 140 sends a call request message to the current MSC serving the roaming mobile unit 160. This call request message is sent to PSTN 130 via link 230b.

PSTN 130 determines the destination of the call request message, preferably by extracting destination information from the call request message. PSTN 130 then routes the call request message over link 230a to Serving MSC 150.

Serving MSC 150 utilizes at least a portion of the call request message to determine the identity of called mobile unit 160. Upon determining the identity of called mobile unit 160, Serving MSC 150 sends the call request message to base station 170 over link 240.

Base station 170 sends the call request message over the air to mobile unit 160 via air interface 260. The air interface used can vary, and depends upon the type of communication system that called mobile unit 160 has registered with.

FIG. 2 depicts a flow chart 200 of a calling phone calling a roaming mobile unit in accordance with the present invention. A calling party initiates (201) a call request to a mobile unit that is roaming. The calling party can be a wireline phone or a mobile phone. If the calling phone is a wireline phone, commonly referred to as a POTS (Plain Old Telephone System) phone, the call request is sent to a switch. If the calling phone is a mobile unit, the call request is sent to the Mobile Switching Center (MSC) that is serving the mobile unit.

A switch routes (203) the call request to the home MSC of the called mobile unit. When the calling party is a wireline phone, the call request traverses a PSTN network. When the calling party is a mobile phone, the call request traverses the serving MSC of the calling mobile unit.

The home MSC of the called mobile unit routes (205) the call request to the MSC that is currently serving the roaming called mobile unit. The home MSC determines the identity of the serving MSC by accessing a Home Location Register (HLR) database that includes a subscriber record for mobile units that are registered with the home MSC. The subscriber record includes a field indicating the current location of the called mobile unit. In the embodiment wherein the calling party is a wireline phone, the call request now traverses the PSTN network. In the embodiment where the calling party is a mobile unit, the call request traverses a cellular communication network via an MSC.

The serving MSC of the called mobile unit delivers (207) the call request to the called mobile unit. Upon answering the call request and thereby completing the call request, a first voice path is established between the calling phone and the mobile unit. The first voice path is the communication link that carries voice and/or data between the calling phone and the mobile unit. The first voice path traverses the switch, the PSTN, the Home MSC, the PSTN, and the Serving MSC.

In accordance with an exemplary embodiment of the present invention, the serving MSC realizes that the first voice path includes links to and from the home MSC of the roaming mobile unit. Accordingly, the serving MSC initiates (209) backward signaling to the switch. The backward signaling is sent to the switch to determine a shorter path between the switch and the serving MSC. The backward signaling may be done during the call setup, but is preferably accomplished after the call is setup on the original, first call path. In this manner, the present invention does not lead to increased access time. The process of finding a more optimal second voice path is thereby done while the call is occurring.

The serving MSC sets up (211) a second voice path for the call between the calling phone and the called mobile unit. The serving MSC preferably knows to set up a second voice path because it knows that the called party is roaming in its coverage area. Because the mobile unit is roaming, the serving MSC attempts to establish a second call path that is more desirable than the first, originally-set up call path. The second call path is preferably shorter than the first call path, thereby decreasing the likelihood of dropped calls. The second voice path is different than the first voice path. The second voice path is shorter than the first voice path. As used herein, the term shorter refers to a voice path that either spans a shorter distance **and/or has fewer connections between endpoints.**

In one embodiment of the present invention, the second voice path is a subset of the first voice path. In this manner the second voice path includes portions of the first voice path, but does not include all legs of the first voice path. In this manner, the voice path is shorter, which leads to a higher Quality of Service (QoS) and a more reliable connection. In addition, by eliminating connections from the first voice path, less bandwidth is consumed by the call using the second voice path. Further, the system resource frees up upon moving the voice path from the first voice path to the second voice path.

The second voice path preferably releases all links going to or from the home MSC of the called mobile unit. In this manner, calls to a roaming MSC do not have to have voice and data routed through the home MSC. This can save a great amount of time and lead to much higher reliability in cases where the mobile unit is roaming in a location that is geographically distant from the home MSC but geographically close to the calling phone. In this manner, the length of the voice path can be greatly reduced.

## Claims

1. A method for routing a call to a roaming mobile unit, the method comprising the steps of:
receiving a call request from a calling party for a mobile unit that is roaming;
routing the call request to the mobile unit via the home Mobile Switching Center (MSC) of the mobile unit;
establishing a first voice path between the calling party and the roaming mobile unit; and
establishing a second voice path between the calling phone and the roaming mobile unit.

2. A method for routing a call to a roaming mobile unit in accordance with claim 1, wherein the first voice path comprises a plurality of links, the method further comprising releasing a portion of the plurality of links.

3. A method for routing a call to a roaming mobile unit in accordance with claim 2, wherein the step of releasing a portion of the plurality of links occurs subsequent to the step of establishing the second voice path.

4. A method for routing a call to a roaming mobile unit in accordance with claim 1, wherein the first voice path traverses the home MSC.

5. A method for routing a call to a roaming mobile unit in accordance with claim 1, wherein voice signals are sent between the calling party and the roaming mobile unit on the first voice path, the method further comprising switching the voice signals to the second voice path.

6. A method for routing a call to a roaming mobile unit in accordance with claim 1, wherein the second voice path is a subset of the first voice path.

7. A method for establishing a call path between a calling phone and a roaming mobile unit, the method comprising the steps of:
establishing a call path between a calling phone and a roaming mobile unit on a first call path; and
establishing a communication path between the calling phone and the roaming mobile unit on a second call path, wherein the second call path is different than the first call path.

8. A method for establishing a call path between a calling phone and a roaming mobile unit in accordance with claim 7, wherein the first voice path traverses the home MSC.

9. A method for establishing a voice path between a calling phone and a roaming mobile unit, the roaming mobile unit having a home Mobile Switching Center (MSC) and currently being served by a serving MSC different than the home MSC, the method comprising:
establishing a first voice path between the calling phone and the roaming mobile unit, the first voice path traversing the Home MSC of the mobile unit and carrying voice signals between the calling phone and the roaming mobile unit; and
switching the voice signals to a second voice path different than the first voice path, the second voice path not traversing the Home MSC.

10. A method for establishing a voice path between a calling phone and a roaming mobile unit, the roaming mobile unit having a home Mobile Switching Center (MSC) and currently being served by a serving MSC different than the home MSC, the method comprising:
establishing a first voice path for a call via a switch, a home MSC, and a serving MSC; and
during the call, switching the voice path to a second voice path, the second voice path traversing the Serving MSC and the switch but not the home MSC.
